# EUROPÄISCHE PATENTSCHRIFT

(11) **EP 2 327 138 B1**
(45) Veröffentlichungstag und Bekanntmachung des Hinweises auf die Patenterteilung: **04.07.2012**
(21) Anmeldenummer: 09782163.1
(22) Anmeldetag: 25.08.2009
(51) Int. Cl.: H02K 3/34

(54) **STATOR FÜR EINEN INNENLÄUFERMOTOR**
STATOR FOR AN INTERNAL ROTOR MOTOR
STATOR DESTINÉ À UN MOTEUR ÉLECTRIQUE AVEC ROTOR INTERNE

(30) Priorität: 26.09.2008 DE 202008012830 U; 18.12.2008 DE 202008016729 U
(43) Veröffentlichungstag der Anmeldung: 01.06.2011
(73) Patentinhaber: EBM-Papst Mulfingen GmbH&CO. KG, 74673 Mulfingen (DE)
(72) Erfinder: HELI, Thomas, 74595 Langenburg (DE); SCHLER, Christian, 74731 Walldürn (DE); POLLOK, Erich, 97996 Niederstetten (DE)
(74) Vertreter: Patentanwälte Dr. Solf & Zapf
(86) Internationale Anmeldenummer: PCT/EP2009/060930
(87) Internationale Veröffentlichungsnummer: WO 2010/034579

(56) Entgegenhaltungen:
- EP-A1- 1 322 021
- EP-A1- 1 460 748
- EP-A2- 0 748 025
- DE-A1- 19 842 170
- DE-U1-202004 010 513
- US-A- 5 828 147

## Beschreibung

Die vorliegende Erfindung betrifft einen Stator für einen als Innenläufer ausgebildeten Elektromotor, bestehend aus einem Statorblechpaket aus einzelnen geschichteten Blechzuschnitten, mit einer inneren Aufnahmeöffnung für einen Rotor in einem Statorinnenpaket mit sternförmig von der Umfangswandung der Aufnahmeöffnung radial nach außen ragenden Polzähnen aus Polzahnstegen und endseitigen Polzahn-Passstücken, wobei das Statorinnenpaket einen Isolationskörper aufweist, der die Polzähne derart umgibt, dass er einen elektrisch isolierenden Spulenträger für um die Polzahnstege gewickelte Motorwicklungen bildet, sowie aus einem das Statorinnenpaket umfassenden Rückschlussring, der eine der Anzahl der Polzähne entsprechende Anzahl von Fügenuten aufweist, mit denen die Polzähne über ihre Polzahn-Passstücke mit dem Rückschlussring verbunden sind, sowie zwischen den Fügenuten ausgebildeten weiteren Nuten, wobei die Motorwicklungen über elektrische Anschlusskontakte mit elektrischen Anschlussleitern verbindbar sind, wobei an einer Stirnseite am Isolationskörper axial abstehende Steckkontakte befestigt sind, die jeweils mit einem an der Stirnseite herausgeführten freien Ende der Wicklungen verbunden sind und auf die Steckkontakte eine Schaltscheibe mit einer der Anzahl der zu kontaktierenden Steckkontakte entsprechenden Zahl von Gegenkontakten durch Aufstecken verbindbar ist, wobei in der Schaltscheibe die elektrischen Anschlussleitungen verdrahtet sind,.

Ein derartiger Stator ist aus der EP 1 087 497 B1 bekannt. Der bekannte Stator erfordert einen relativ hohen Verschaltungsaufwand, denn die einzelnen Wicklungen müssen jeweils mit ihren beiden Wicklungsenden heraufgeführt und entsprechend der jeweilig gewünschten Ansteuerung der Wicklungen mit den elektrischen Anschlussleitungen verbunden werden. Hierdurch ist jeweils eine individuelle Fertigung jedes Stators erforderlich. Zudem ist bei den bekannten Faktoren eine elektrische Trennung der einzelnen Wicklungen, insbesondere eine Abschirmung gegen Kriechstrom problematisch.

Aus der EP 1 322 021 B1 ist ein gattungsgemäßer Stator bekannt, bei dem die zwischen den Fügenuten vorhandenen Nuten eine elektrische Schutzstrecke bilden, um Kriechströme zu vermeiden. Die elektrischen Kontakte zum Kontaktieren der Wicklungsenden sind am Rückschlussring elektrisch isolierend ausgebildet. Demnach kann die Verdrahtung der Wicklungsenden der Wicklungen erst nach dem Aufpressen des Rückschlussringes erfolgen, was aber fertigungstechnisch nachteilig ist. Diese elektrischen Wicklungskontakte werden über an einer Trägerscheibe angeordnete Steck-Gegenkontakte kontaktiert, die ihrerseits über eine Steckverbindung mit einer Steuerschaltung verbunden werden. Dies setzt voraus, dass die Steuerschaltung selbst am Stator befestigt wird.

Der vorliegenden Erfindung liegt die Aufgabe zu Grunde, den Fertigungsaufwand der bekannten Statoren zu verringern und darüber hinaus eine kriechstromsichere Ausgestaltung des Stators zu gewährleisten.

Erfindungsgemäß wird dies dadurch erreicht, dass die Motorwicklungen in Flyer-Technik gewickelt sind, wobei die gegenüberliegenden Wicklungen direkt miteinander verbunden sind und wobei an dem Isolationskörper Verschlussstücke vorhanden sind, die in Verlängerung der Polzähne im Bereich ihrer Passstücke am Isolationskörper ausgebildet sind, in denen die Steckkontakte als Kontaktzungen in Schlitze der Verschlussstücke eingepresst sind.

Der modulare Aufbau des Stators ermöglicht durch die Trennung zwischen dem bewickelten Statorinnenpaket und der separaten vorverschalteten Schaltscheibe eine hohe Flexibilität und Rationalisierung.

Weitere vorteilhafte Ausführungen der Erfindung sind in den Unteransprüchen enthalten und werden an Hand des in den beiliegenden Zeichnungen dargestellten Ausführungsbeispiels näher erläutert.

In den nachstehenden Figuren sind die gleichen Teile mit jeweils denselben Bezugsziffern gekennzeichnet.

Es zeigen:
- Fig. 1: Eine Explosionsdarstellung eines erfindungsgemäßen Stators,
- Fig. 2: einen Längsschnitt durch einen erfindungsgemäßen Stator,
- Fig. 3: eine perspektivische Ansicht eines gewickelten Statorinnenpaketes des Stators gemäß Fig. 1,
- Fig. 4: einen Teilschnitt gemäß der Schnittlinie IV-IV in Fig. 2,
- Fig. 5: einen Teilschnitt entlang der Schnittlinie V-V in Fig. 2,
- Fig. 6: eine perspektivische Ansicht auf eine erfindungsgemäße Schaltscheibe und
- Fig. 7: eine Aufsicht auf eine erfindungsgemäße Schaltscheibe.

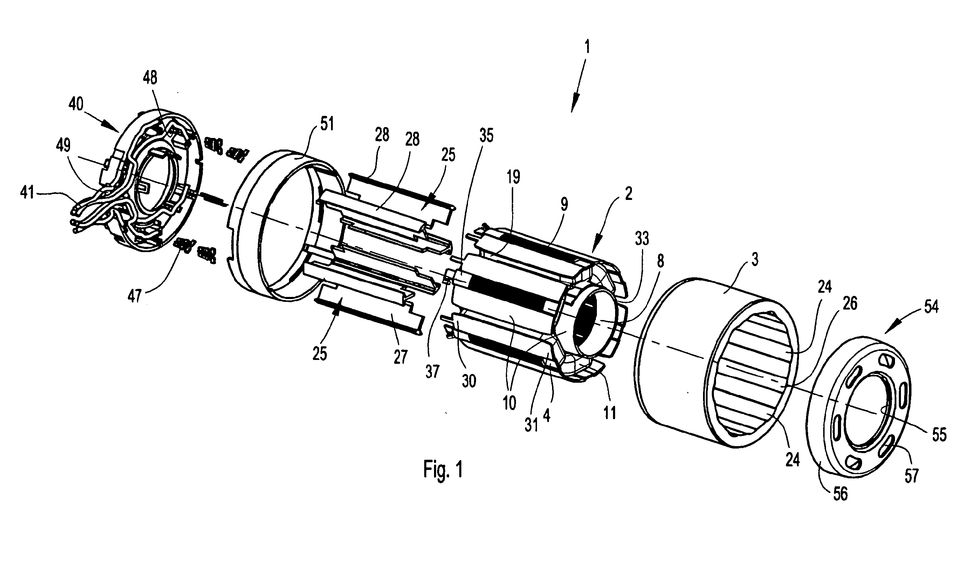

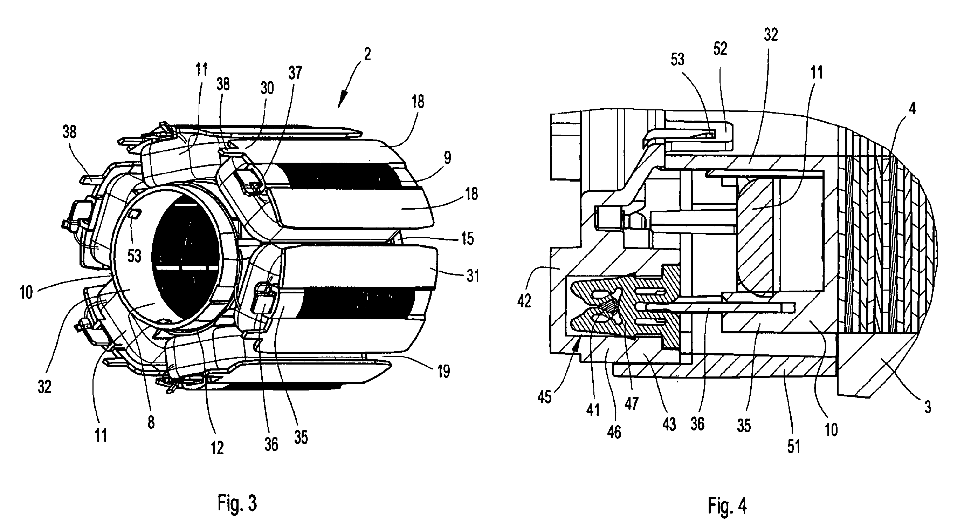

Wie in den Fig. 1 bis 5 dargestellt ist, besteht ein erfindungsgemäßer Stator mit Sternschaltung der Anschlussleitungen für einen als Innenläufer ausgebildeten Elektromotor aus einem sternförmigen Statorinnenpaket (Innenstern) 2 und einem äußeren mit dem Statorinnenpaket 2 verbindbaren Rückschlussring 3. Das Statorinnenpaket 2 wird aus einem aus einzelnen Metall-Blechzuschnitten paketierten Innenstern 4 gebildet, der einzelne umfangsgemäß gleich beabstandete Polzähne 5 besitzt. Jeder Polzahn 5 weist einen in radialer Richtung gesehen inneren Polschuh 6 und einen von diesem radial nach außen ragenden Polsteg 7 auf. Die Polschuhe 6 umschließen eine innere Aufnahmeöffnung 8, in der beim fertigen Motor ein Rotor drehbar gelagert ist. Im Bereich der Polschuhe 6 ist an mehreren der Blechzuschnitte eine umlaufende Verbindung 5a zwischen den einzelnen Polzähnen 5 vorhanden. Die übrigen Blechzuschnitte sind nur über die Paketierung miteinander verbunden. An den freien Enden der Polstege 7 sind z. B. bogenförmig oder schwalbenschwanzartig ausgebildete Polzahn-Passstücke 9 angeformt. Der Innenstern 4 ist mit einem Kunststoff-Isolationskörper 10 umspritzt, der einen elektrisch isolierenden Spulenträger bildet. Auf den Polstegen 7 sind Motorwicklungen 11, insbesondere aus Kupferdraht aufgebracht. Die Motorwicklungen 11 sind in der sogenannten Flyer-Technik gewickelt, wobei die einander diametral gegenüberliegenden Wicklungen 11 direkt jeweils miteinander verbunden sind. Hierzu werden die einzelnen Wicklungen 11 über einen Verbindungsdraht 12 miteinander angeschlossen. Der Verbindungsdraht 12 ist an einem zentrisch ausgebildeten zylindrischen Ansatz des Isolationskörpers 10 in umlaufenden Nuten jeweils geführt. Wie aus Fig. 3 zu erkennen ist, erstreckt sich der Isolationskörper 10 axial über die gesamte Länge von zwischen den Polstegen 7 ausgebildeten Axialräumen 15, die im Bereich der Passstücke 9 offen sind und im Inneren durch die Polschuhe 6 begrenzt werden. Hierzu weist der Isolationskörper 10 in jedem Axialraum 15 einen an die Polschuhe 6 anliegenden Bodenabschnitt 16 auf sowie zwei einander gegenüberliegende, an den Polstegen 7 anliegende Wandungsabschnitte 17, die in umfangsgemäß verlaufende, aufeinander zu gerichtete Abdeckstege 18 übergehen, zwischen deren einander gegenüberliegenden Stegenden ein Spalt 19 vorhanden ist. Durch den Bodenabschnitt 16, die Wandungsabschnitte 17 und die Abdeckstege 18 wird ein Wickelraum umfasst, der zur Aufnahme zweier benachbarter Wicklungshälften der um die Polstege 7 gewickelten Motorwicklungen 11 dient. In einen zwischen den nebeneinander liegenden Polschuhen 6 vorhandenen Abstandsspalt 20 ragt ein Ansatz 21 des Bodenabschnittes 16 hinein, wodurch dieser Abstandsspalt 20 vom Axialraum 15 her verschlossen wird. In dem dem Ansatz 21 gegenüberliegenden Innenwandungsabschnitt des Bodenabschnittes 16 ist zwischen zwei Erhebungen 22 eine Axialnut 23 ausgebildet, die mittig im Spalt 19 angeordnet ist. Wie aus den Fig. 1 zu entnehmen ist, besitzt der ebenfalls aus Metall-Blechzuschnitten paketierte, d. h. geschichtete Rückschlussring 3 an seiner inneren Umfangswandung der Anzahl der Polstege 7 anzahlmäßig entsprechende Fügenuten 24, deren Querschnittsprofil dem der Passstücke 9 angepasst ist, so dass der Rückschlussring 3 auf das Statorinnenpaket 2 axial aufgeschoben bzw. aufgepresst werden kann, wobei die Passstücke 9 in den Fügenuten 24 mit Presspassung sitzen. Mittig zwischen zwei benachbarten Fügenuten 24 befinden sich herstellungsbedingte Stanznuten 26, wozu auf die EP 1 087 497 B1 in vollem Umfange verwiesen wird. Diese Stanznuten 26 dienen auch zum Vermeiden von schädlichen Kriechströmen am Rückschussring 3. Im befestigten Zustand des Rückschlussrings 3 auf dem bewickelten Statorinnenpaket 2 liegen die Abdeckungen 18 am Rückschlussring 3 an.

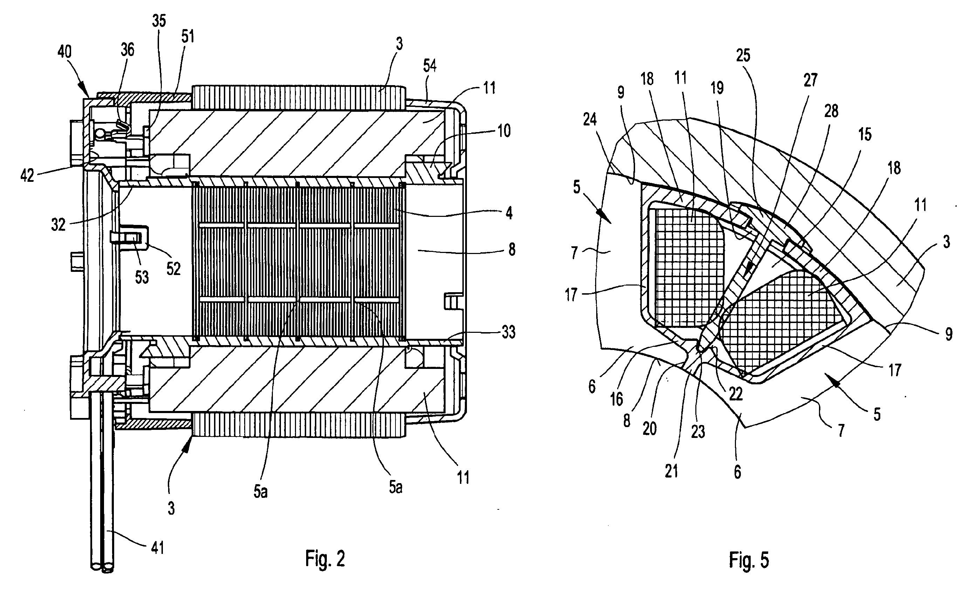

Zur Fasentrennung zwischen den durch die auf den Polstegen 7 befindlichen Windungen 11 gebildeten Statorpole wird ein kombinierter Schieber 25 verwendet, der im montierten Zustand des Rückschlussrings 3 seitlich in axialer Richtung zwischen die Wicklungen 11 in die Axialräume 15 eingeschoben wird. Dieser Schieber 25 ist im Querschnitt T-förmig ausgebildet, wobei der längere radiale T-Schenkel 27 als Fasentrenner wirkt und mit seinem inneren freien Ende in der Axialnut 23 geführt ist und mit seinem äußeren Ende in den Spalt 19 hineinragt, siehe Fig. 5. Indem der T-Schenkel 27 in die erhabene Axialnut 23 eingreift, werden lose Wicklungsdrähte zwischen den Polen weggeschoben, so dass sich die Wicklungsdrähte der einzelnen Wicklungen nicht berühren und eine sichere Fasentrennung gewährleistet ist. Weiterhin wird durch die erhaben angeordnete Axialnut 23 zwischen den Erhebungen 22 sichergestellt, dass die Wicklungsdrähte nicht vom Schieber 25 eingeklemmt werden. Der kurze umfangsgemäß verlaufende T-Schenkel 28 wird in der Stanznut 26 und in dem Spalt 19 geführt und ist deren Querschnitt angepasst, so dass er als Deckschieber wirkt, wodurch einerseits die Fixierung und andererseits die Einhaltung der Luft-Kriechstrecken für am inneren Umfang des Rückschlussrings 3 auftretende Kriechströme erreicht wird.

Die axiale Erstreckung des Isolationskörpers 10 entspricht der axialen Länge der Wicklungen 11, so dass der Isolationskörper 10 jeweils beidseitig den Rückschlussring 3 mit einem Endabschnitt 30, 31 um die Höhe der durch die Wicklungen 11 gebildeten Wicklungsköpfe überragt. Weiterhin weist der Isolationskörper 10 beidseitig zylinderrohrförmige Ansätze 32, 33 auf, deren Innendurchmesser denjenigen der Aufnahmeöffnung 8 entspricht bzw. angepasst ist.

Im Bereich der Endabschnitte 30 auf einer Seite des Innensterns 4 sind an dem Isolationskörper 10 Verschlussstücke 35 vorhanden. Diese Verschlussstücke 35 sind in Verlängerung der Polzähne 5 im Bereich der Passstücke 9 am Isolationskörper 10 ausgebildet. Die Verschlussstücke 35 weisen axial vorstehende metallische Kontakte 36 auf, siehe Fig. 4, die in Schlitze der Verschlussstücke 35 eingepresst und zungenförmig ausgebildet sind. Diese Kontakte 36 stehen in axialer Richtung vor und besitzen seitlich angeformte Schweißhaken 37, siehe Fig. 3. Die Schweißhaken 37 dienen zur elektrischen Kontaktierung der Wicklungsenden der Wicklungen 11 durch Verschweißung. Im vorliegenden Fall ergeben sich auf Grund der Flyer-Wicklungstechnik sechs Wicklungsenden und somit sechs Kontaktzungen 36. Seitlich der Kontaktzungen 36 sind jeweils an einem der Abdeckstege 18 Kunststoffpfosten 38 angeformt, die in axialer Richtung abstehen und als Wicklungshilfe dazu dienen, die Wicklungsdrähte während des Wickelprozesses anzubinden. Nach Abschluss des Wickel- und Schweißvorganges werden diese Kunststoffpfosten 38, zusammen mit den Wickeldrahtresten entfernt.

Auf der Seite der Kontaktzungen 36 befindet sich eine Schaltscheibe 40, mittels der die elektrische Kontaktierung von elektrischen Anschlussleitungen 41 mit den Wicklungen 11 über die Kontaktzungen 36 erfolgt. Die Schaltscheibe 40 ist als hohlzylindrische Halbschale aus Kunststoff mit einem kreisförmigen Boden 42 und einem umlaufenden Rand 43 ausgebildet, wobei der Boden 42 eine mittige Öffnung 44 umfasst, gegen deren Öffnungsrand im aufgesteckten Zustand der Schaltscheibe 40 der zylinderförmige Ansatz 32 des Kunststoffkörpers 10 anliegt. Auf dem Boden 42 sind Schneid-Klemm-Kontakte 45 angeordnet, die aus am Boden 42 angespritzten Kunststoff-Aufnahmeteilen 46 und in diesen gelagerten Schneid-Klemm-Elementen 47 bestehen. Diese Schneid-Klemm-Kontakte 45 dienen einerseits zum Kontaktieren der Enden der Anschlussleitungen 41 und andererseits der Kontaktzungen 36. Zusätzlich sind am Boden 42 Klemm- und Führungselemente 48 für die einzelnen Anschlussleitungen 41 vorgesehen. Für die seitliche Zuführung der Anschlussleitungen 41 in den Innenraum der Schaltscheibe 40 weist diese in ihrem Rand 43 eine randoffene Ausnehmung 49 auf.

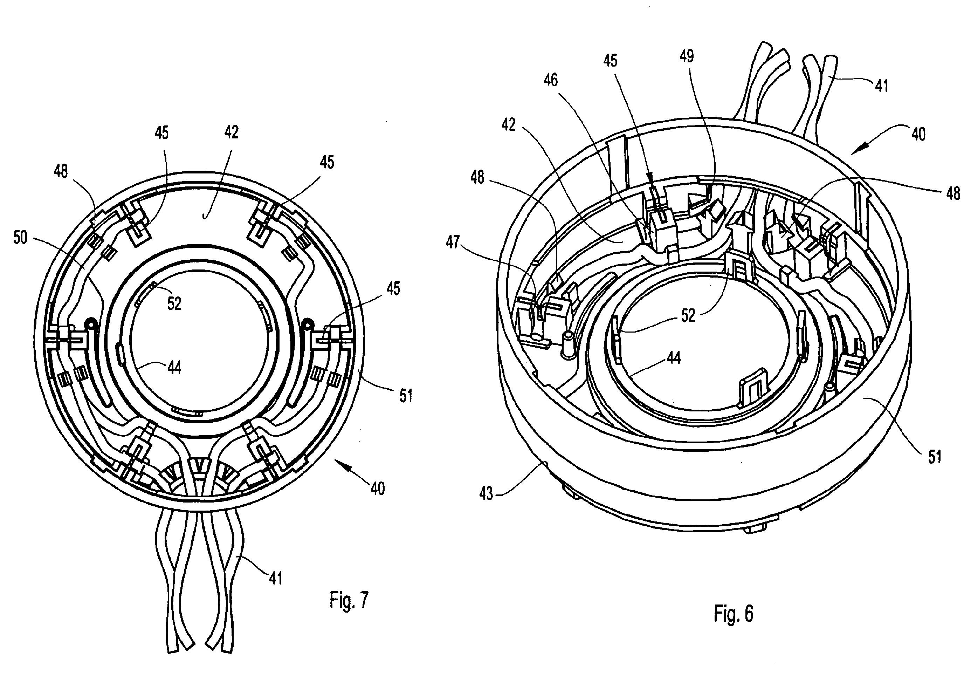

In Fig. 7 ist eine Sternschaltung für die sechs Anschlussleitungen 41 realisiert, wobei eine Drahtbrücke 50 über drei Schneid-Klemm-Kontakte 45 gelegt ist, welche den Stempunkt bilden. Eine unverschaltete Variante besteht darin, dass alle sechs Wicklungsenden der sechs Wicklungen 11 direkt über die Schneid-Klemm-Kontakte 45 an die Leitungen 41 angeschlossen sind.

Zwischen der Schaltscheibe 40 und dem Rückschlussring 3 ist zweckmäßigerweise ein umlaufender Zwischenring 51 aus Kunststoff vorgesehen, der einseitig auf den Rand 43 der Schaltscheibe 40 aufgesetzt und befestigt ist, so dass die Schaltscheibe 40 hierdurch zweiteilig ausgebildet ist. Dieser Zwischenring 51 dient der Einhaltung von Luft- und Kriechstrecken zwischen den Kontakten der Schaltscheibe und den Motorwicklungen 11. Die nachträgliche Montage dieses Zwischenrings 51 ermöglicht eine einfache Einführung und Verlegung der Anschlussleitungen 41 im Vergleich mit einer um den Zwischenring vergrößerten einteiligen Schaltscheibe mit hohem Rand, die ebenfalls im Rahmen der Erfindung liegt. Bei einer derartigen Schaltscheibe müssten die Anschlussleitungen 41 durch eine umfangsgemäß geschlossene Öffnung, anstatt vorteilhafterweise durch eine randoffene Ausnehmung eingeführt werden, wodurch die Verlegung auf dem Boden der relativ tiefen Schaltscheibe 40 schwieriger ist.

Am Rand der Öffnung 44 der Schaltscheibe 40 sind Rastlaschen 52, insbesondere drei Rastlaschen um 120 ° gegeneinander versetzt angeordnet, die mit Rasthaken 53 am zylinderförmigen Ansatz 32 des Kunststoffkörpers 10 zusammenwirken und die Schaltscheibe 40 im aufgesteckten Zustand am Statorinnenpaket 2 fixieren.

Wie insbesondere den Fig. 1 und 2 zu entnehmen ist, weist der erfindungsgemäße Stator 1 auf der der Schaltscheibe 40 gegenüberliegenden Seite einen Wickelkopfschutz 54 auf, der ebenfalls halbschalenförmig ausgebildet ist und eine mittlere Aufstecköffnung 55 besitzt, mit der der Wickelkopfschutz 54 auf den zylinderförmigen Ansatz 33 des Kunststoff-Isolationskörpers 10 aufgesteckt werden kann. Im aufgesteckten Zustand des Wickelkopfschutzes 54 liegt dieser mit dem Stimende seiner umlaufenden Wandung 56 an dem Rückschlussring 3 an. Der Wickelkopfschutz 54 ist als Kunststoffspritzgussteil ausgebildet und weist in seinem Boden Öffnungen 57 auf, die zur Lüftung dienen.

Die Montage des erfindungsgemäßen Stators bzw. seine Herstellung ist wie folgt.

Zunächst werden das sternförmige Statorinnenpaket 2 und der Rückschlussring 3 im Paketierverfahren aus den einzelnen Blechzuschnitten hergestellt. Anschließend wird das derart hergestellte Statorinnenpaket 2 mit dem Isolationskörper 10 umspritzt. Danach werden die Motorwicklungen 11 im Flyer-Wicklungsverfahren um die Polzähne 5 gewickelt. Anschließend werden die Wicklungsenden mit den Kontaktzungen 36 über die Schweißhaken 37 verbunden. Hiernach wird der Rückschlussring 3 auf das vorgefertigte Statorinnenpaket 2 aufgepresst und anschließend werden die Schieber 25 in die Axialräume 15 eingeführt. Hierauf folgt die Montage der vorgefertigten bzw. vorverdrahteten Schaltscheibe 40, die, nachdem der Zwischenring 51 befestigt worden ist, seitlich auf das zusammengefügte Statorblechpaket, d. h. Statorinnenpaket 2 aufgeschoben und über Rastmittel 52, 53 fixiert wird, wobei eine Kontaktierung zwischen den Schneid-Klemm-Kontakten 45 und den Kontaktzungen 36 erfolgt. Abschließend wird der Wickelkopfschutz 54 seitlich auf das der Schaltscheibe 40 gegenüberliegende Ende des zusammengefügten Statorinnenpaketes 2 auf den zylinderförmigen Ansatz 33 aufgeschoben bzw. aufgepresst oder aufgeclipst.

## Patentansprüche

1. Stator für einen als Innenläufer ausgebildeten Elektromotor, bestehend aus einem Statorblechpaket aus einzelnen geschichteten Blechzuschnitten mit einer inneren Aufnahmeöffnung (8) für einen Rotor in einem Statorinnenpaket (2) mit sternförmig radial nach außen ragenden Polzähnen (5) aus Polzahnstegen (7) und endseitigen Polzahn-Passstücken (9), wobei das Statorinnenpaket (2) einen Isolationskörper (10) aufweist, der die Polzähne (5) derartig umgibt, dass er einen elektrisch isolierenden Spulenträger für um die Polzahnstege (7) gewickelte Motorwicklungen (11) bildet, sowie aus einem das Statorinnenpaket (2) umfassenden Rückschlussring (3), der einer der Anzahl der Polzähne (5) entsprechende Anzahl von Fügenuten (24) aufweist, mit denen die Polzähne (5) über ihre Polzahn-Passstücke (9) mit dem Rückschlussring (3) verbunden sind, sowie zwischen den Fügenuten (24) ausgebildeten weiteren Nuten (26), wobei die Motorwicklungen (11) über elektrische Anschlusskontakte mit elektrischen Anschlussleitungen (41) verbindbar sind, wobei an einer Stirnseite am Isolationskörper (10) axial abstehende Steckkontakte (36) befestigt sind, die jeweils mit einem an der Stirnseite herausgeführten freien Ende der Wicklungen (11) verbunden sind und auf die Steckkontakte (36) eine Schaltscheibe (40) mit einer der Anzahl der zu kontaktierenden Steckkontakte (36) entsprechenden Zahl von Gegenkontakten (45) durch Aufstecken verbindbar ist, wobei in der Schaltscheibe (40) die elektrischen Anschlussleitungen (41) verdrahtet sind,
**dadurch gekennzeichnet, dass** die Motorwicklungen (11) in Flyer-Technik gewickelt sind, wobei die gegenüberliegenden Wicklungen (11) direkt miteinander verbunden sind und wobei an dem Isolationskörper (10) Verschlussstücke (35) vorhanden sind, die in Verlängerung der Polzähne (5) im Bereich ihrer Passstücke (9) am Isolationskörper ausgebildet sind, in denen die Steckkontakte (36) als Kontaktzungen in Schlitze der Verschlussstücke (35) eingepresst sind.

2. Stator nach Anspruch 1,
**dadurch gekennzeichnet, dass** die Steckkontakte (36) seitlich angeformte Schweißhaken (37) für die Kontaktierung der Enden der Wicklungen (11) aufweisen.

3. Stator nach Anspruch 1 oder 2,
**dadurch gekennzeichnet, dass** seitlich der Kontaktzungen (36) jeweils an dem Isolationskörper (10) Kunststoffpfosten (38) angeformt sind, die in axialer Richtung abstehen und als Wickelhilfe dienen.

4. Stator nach einem der Ansprüche 1 bis 3,
**dadurch gekennzeichnet, dass** dieSchaltscheibe(40)als hohlzylindrische Halbschale mit einem kreisförmigen Boden (42) und einem umlaufenden Rand (43) ausgebildet ist, wobei der Boden (42) eine mittige Öffnung (44) umfasst, gegen deren Öffnungsrand im aufgesteckten Zustand der Schaltscheibe (40) der Kunststoffkörper (10) mit einem zylinderförmigen Ansatz (32) anliegt.

5. Stator nach Anspruch 4,
**dadurch gekennzeichnet, dass** auf dem Boden (42) der Schaltscheibe (40) Schneid-Klemm-Kontakte (45) vorhanden sind, die aus angespritzten Kunststoffaufnahmeteilen (46) mit eingesetzten Schneid-Klemmelementen (47) bestehen, und die Schneid-Klemm-Kontakte (45) einerseits zum Kontaktieren der Enden der Anschlussleitungen (41) und andererseits der Kontaktzungen (36) dienen.

6. Stator nach einem der Ansprüche 1 bis 5,
**dadurch gekennzeichnet, dass** am Boden (42) der Schaltscheibe (40) Klemm- und Führungselemente (46) für die einzelnen Anschlussleitungen (41) ausgebildet sind und für die seitliche Zuführung der Anschlussleitungen (41) in den Innenraum der Schaltscheibe (40) eine randoffene Ausnehmung (49) vorhanden ist.

7. Stator nach einem der Ansprüche 1 bis 6,
**dadurch gekennzeichnet, dass** zwischen der Schaltscheibe (40) und dem Statorinnenpaket (2) ein umlaufender Zwischenring (51) vorgesehen ist, der einseitig auf den Rand (43) der Schaltscheibe (40) aufpressbar ist, so dass die Schaltscheibe (40) zweiteilig ausgebildet ist.

8. Stator nach einem der Ansprüche 1 bis 7,
**dadurch gekennzeichnet, dass** am Rand der Öffnung (44) der Schaltscheibe (40) Rastlaschen (52) ausgebildet sind, die mit Rasthaken (53) am zylinderförmigen Ansatz (32) des Kunststoffkörpers (10) zusammenwirken und die Schaltscheibe (40) im aufgesteckten Zustand fixieren, wobei die Schaltscheibe (40) derart dimensioniert ist, dass sie im aufgesteckten Zustand am Statorblechpaket des Rückschlussringes (3) anliegt.

9. Stator nach einem der Ansprüche 1 bis 8,
**dadurch gekennzeichnet, dass** auf der der Schaltscheibe (40) gegenüberliegenden Seite ein halbschalenförmiger Wickelkopfschutz (54) aufsteckbar ist und eine mittlere Aufstecköffnung (55) besitzt, mit der der Wickelkopfschutz (54) auf einen zylinderförmigen Ansatz (33) des Kunststoffisolationskörpers (10) aufgesteckt werden kann und in seinem aufgesteckten Zustand mit seinem Stirnende an dem Rückschlussring (3) anliegt.

10. Stator insbesondere nach einem der Ansprüche 1 bis 9,
**dadurch gekennzeichnet, dass** der Isolationskörper (10) in zwischen den Polstegen (7) vorhandenen Axialräumen (15) einen Bodenabschnitt (16) sowie zwei einander gegenüberliegende Wandungsabschnitte (17) und aufeinander zu gerichtete Abdeckstege (18) aufweist und zwischen den einander gegenüberliegenden Stegenden der Abdeckstege (18) ein Spalt (19) vorhanden ist und durch den Bodenabschnitt (16), die Wandungsabschnitte (17) und die Abdeckstege (18) ein Wickelraum umfasst wird, der zur Aufnahme zweier benachbarter Wicklungshälften der um die Polstege (7) gewickelten Motorwicklungen (11) dient.

11. Stator nach einem der Ansprüche 1 bis 10,
**dadurch gekennzeichnet, dass** in einem zwischen den nebeneinanderliegenden Polschuhen (6) vorhandenen Abstandsspalt (20) ein Ansatz (21) des Bodenabschnitts (16) des Isolationskörpers (10) hineinragt, wodurch dieser Abstandsspalt (20) verschlossen wird.

12. Stator nach einem der Ansprüche 1 bis 11,
**dadurch gekennzeichnet, dass** indemAnsatz(21)zwischen zwei Erhebungen (22) des Bodenabschnitts (16) eine Axialnut (23) ausgebildet ist, die mittig im Spalt angeordnet verläuft.

13. Stator nach einem der Ansprüche 1 bis 12,
**dadurch gekennzeichnet, dass** zur Fasentrennung zwischen den durch die auf den Polstegen (7) befindlichen Wicklungen (11) gebildeten Statorpole ein kombinierter Schieber (25) verwendet wird, der im montierten Zustand des Rückschlussringes (3) seitlich in axialer Richtung zwischen den Wicklungen (11) in die Axialräume (15) geschoben ist.

14. Stator nach einem der Ansprüche 1 bis 13,
**dadurch gekennzeichnet, dass** der Schieber (25) im Querschnitt T-förmig ausgebildet ist, wobei sein längerer radialer T-Schenkel (27) als Fasentrenner wirkt und mit seinem inneren freien Ende in der Axialnut (23) geführt ist und mit seinem äußeren Ende in den Spalt (19) hineinragt, und sein kurzer umfangsgemäß verlaufender T-Schenkel (28) in der Stanznut (26) und in dem Spalt (19) geführt und an deren Querschnitt angepasst ist.

15. Stator nach einem der Ansprüche 1 bis 14,
**dadurch gekennzeichnet, dass** die axiale Erstreckung des Isolationskörpers (10) der axialen Länge der Wicklungen (11) entspricht, so dass der Isolationskörper (10) jeweils beidseitig den Rückschlussring (3) mit einem Endabschnitt (30, 31) um die Höhe der durch die Wicklungen (11) gebildeten Wicklungsköpfe überragt.

## Claims

1. A stator for an electric motor in the form of an internal rotor, consisting of a stator iron core of individual stacked metal-sheet blanks with an inner receiving opening (8) for a rotor in a stator inner core (2) with pole teeth (5), projecting radially outwards in a star shape, of pole tooth webs (7) and end pole-tooth fitting pieces (9), wherein the stator inner core (2) has an insulating body (10) which surrounds the pole teeth (5) in such a manner that it forms an electrically insulating coil support for motor windings (11) wound around the pole tooth webs (7), as well as consisting of a rear end ring (3), enclosing the stator inner core, which has a number of joining grooves (24) corresponding to the number of pole teeth (5), which joining grooves (24) connect the pole teeth (5) to the rear end ring (3) via their pole-tooth fitting pieces (3), as well as further grooves (26) formed between the joining grooves (24), wherein the motor windings (11) are connectable to electrical connecting lines (41) via electrical connecting contacts, wherein axially protruding plug contacts (36) are secured to one end face of the insulating body (10), which plug contacts (36) are in each case connected to a free end, guided out at the end face, of the windings, and a wiring disc (40) with a number of counter contacts (45) corresponding to the number of the plug contacts (36) to be contacted is connectable onto the plug contacts (36) by placement thereon, wherein the electrical connecting lines (41) are wired up in the wiring disc (40), **characterised in that** the motor windings (11) are wound using the flyer technique, wherein the facing motor windings (11) are connected directly to one another and wherein closing pieces (35) are present on the insulating body (10), which closing pieces (35) are formed on the insulating body as an extension of the pole teeth (5) in the region of their fitting pieces (9), in which the plug contacts (36) are pressed as contact tongues into slits of the closing pieces (35).

2. A stator according to claim 1, **characterised in that** the plug contacts (36) have laterally formed weld hooks (37) for contacting the ends of the windings (11).

3. A stator according to claim 1 or 2, **characterised in that** plastics posts (38) are formed on the insulting body (10) so as to be to the side of the contact tongues (36) in each case, which plastic posts (38) protrude in an axial direction and serve as a winding aid.

4. A stator according to any one of claims 1 to 3, **characterised in that** the wiring disc (40) is in the form of a hollow-cylindrical half shell with a circular bottom (42) and a circumferential edge (43), wherein the bottom (42) comprises a central opening (44) against the opening edge of which the plastics body (10) rests in the placed-on state of the wiring disc (40) by means of a cylindrical projection (32).

5. A stator according to claim 4, **characterised in that** insulation displacement contacts (45) are present on the bottom (42) of the wiring disc (40) and consist of injection-moulded plastics receiving parts (46) with inserted insulation displacement elements (47) and the insulation displacement contacts (45) serve on the one hand to contact the ends of the connecting lines (41) and on the other hand the contact tongues (36).

6. A stator according to any one of claims 1 to 5, **characterised in that** clamping and guiding elements (46 [sic]) for the individual connecting lines (41) are formed on the bottom (42) of the wiring disc (40) and an edge-open cutout (49) is present for lateral feeding of the connecting lines (41) into the interior of the wiring disc (40).

7. A stator according to any one of claims 1 to 6, **characterised in that** an encircling intermediate ring (51) is provided between the wiring disc (40) and the stator inner core (2), which intermediate ring (51) can be pressed on one side onto the edge (43) of the wiring disc (40), so that the wiring disc (40) is two-part.

8. A stator according to any one of claims 1 to 7, **characterised in that** locking lugs (52) are formed at the edge of the opening (44) of the wiring disc (40), which locking lugs (52) cooperate with locking hooks (53) on the cylindrical projection (32) of the plastics body (10) and fix the wiring disc (40) in the placed-on state, wherein the wiring disc (40) is dimensioned in such a manner that it contacts the stator iron core of the rear end ring (3) in the placed-on state.

9. A stator according to any one of claims 1 to 8, **characterised in that** a half-shell-shaped winding head protection means (54) can be placed on at the side opposite the wiring disc (40) and has a middle mounting opening (55) with which the winding head protection means (54) can be placed on a cylindrical projection (33) of the plastics insulating body (10) and in its placed-on state contacts the rear end ring (3) with its front end.

10. A stator in particular according to any one of claims 1 to 9, **characterised in that** in axial spaces (15) present between the pole webs (7), the insulating body (10) has a bottom portion (16) as well as two facing wall portions (17) and covering webs (18) directed toward one another, and between the facing web ends of the covering webs (18) there is a gap (19) and a winding space is enclosed by the bottom portion (16), the wall portions (17) and the covering webs (18), which winding space serves to receive two adjacent winding halves of the motor windings (11) wound around the pole webs (7).

11. A stator according to any one of claims 1 to 10, **characterised in that** a projection (21) of the bottom portion (16) of the insulating body (10) projects in a spacing gap (20) present between the adjacent pole shoes (6), whereby this spacing gap (20) is closed.

12. A stator according to any one of claims 1 to 11, **characterised in that** an axial groove (23) is formed in the projection (21) so as to be between two elevations (22) of the bottom portion (16) and runs in a manner arranged centrally in the gap.

13. A stator according to any one of claims 1 to 12, **characterised in that** for phase separation between the stator poles formed by the windings (11) located on the pole webs (7) use is made of a combined slider (25) which in the mounted state of the rear end ring (3) is pushed, laterally in an axial direction, between the windings (11) into the axial spaces (15).

14. A stator according to any one of claims 1 to 13, **characterised in that** the slider (25) is T-shaped in cross-section, wherein its longer radial T-limb (27) acts as a phase separator and is guided in the axial groove (23) with its inner free end and projects into the gap (19) with its outer end, and its short circumferentially-running T-limb (28) is guided in the stamped groove (26) and in the gap (19) and is adapted to their cross-section.

15. A stator according to any one of claims 1 to 14, **characterised in that** the axial extension of the insulating body (10) corresponds to the axial length of the windings (11), so that the insulating body (10) in each case projects beyond either side of the rear end ring (3) with an end portion (30, 31) by the height of the winding heads formed by the windings (11).

## Revendications

1. Stator destiné à un moteur électrique, conçu sous la forme d'un rotor interne, comprenant un ensemble de tôle stator à base de découpes de tôle individuelles empilées avec une ouverture de logement (8) interne pour un rotor dans un ensemble interne de stator (2) comprenant des dents polaires (5) dépassant en forme d'étoile radialement vers l'extérieur, comprenant des barrettes de dent polaire (7) et des pièces de montage de dent polaire (9) côté extrémité, l'ensemble interne de stator (2) présentant un corps d'isolation (10), qui entoure les dents polaires (5), de telle sorte qu'il forme un support de bobine électriquement isolant pour des enroulements de moteur (11) entourés autour des barrettes de dent polaire (7), et comprenant une bague de reflux (3) comprenant l'ensemble interne de stator (2), laquelle bague présente un nombre de rainures d'assemblage (24) correspondant au nombre des dents polaires (5), rainures avec lesquelles les dents polaires (5) sont reliées par leurs pièces de montage de dent polaire (9) à la bague de reflux (3), et d'autres rainures (26) conçues entre les rainures d'assemblage (24), dans lequel les enroulements de moteur (11) peuvent être reliés par des contacts de branchement électriques à des lignes de branchement (41) électriques, dans lequel des contacts enfichables (36) dépassant axialement sont fixés sur un côté avant sur le corps d'isolation (10), lesquels contacts sont reliés respectivement à une extrémité libre, guidée à la sortie sur le côté avant, des enroulements (11) et un disque de commutation (40) pouvant être relié par emboîtement sur les contacts enfichables (36) avec un nombre de contre-contacts (45) correspondant au nombre des contacts enfichables (36) à contacter, dans lequel les lignes de branchement (41) électriques sont câblées dans le disque de commutation (40),
**caractérisé en ce que** les enroulements de moteur (11) sont enroulés selon la technique de Flyer, les enroulements (11) se faisant face étant reliés les uns aux autres directement et des pièces de fermeture (35) étant présentes sur le corps d'isolation (10), lesquelles pièces sont conçues dans le prolongement des dents polaires (5) dans la zone de leurs pièces adaptées (9) sur le corps d'isolation, pièces dans lesquelles les contacts enfichables (36) sont enfoncés sous forme de lames de contact dans des fentes des pièces de fermeture (35).

2. Stator selon la revendication 1,
**caractérisé en ce que** les contacts enfichables (36) présentent des crochets de soudage (37) formés sur le côté pour la mise en contact des extrémités des enroulements (11).

3. Stator selon la revendication 1 ou 2,
**caractérisé en ce que** des poteaux en plastique (38), qui dépassent dans le sens axial et servent d'aide à l'enroulement, sont formés sur le coté des lames de contact (36) respectivement sur le corps d'isolation (10).

4. Stator selon l'une des revendications 1 à 3,
**caractérisé en ce que** le disque de commutation (40) est conçu sous forme de demi-coque cylindrique creuse avec un fond (42) circulaire et un bord (43) périphérique, le fond (42) présentant une ouverture (44) centrée, dans laquelle le corps plastique (10) s'applique contre le bord d'orifice avec une embase (32) cylindrique lorsque le disque de commutation (40) est dans l'état emboîté.

5. Stator selon la revendication 4,
**caractérisé en ce que** des contacts à borne guillotine (45) sont présents sur le fond (42) du disque de commutation (40), lesquels contacts sont constitués de pièces de logement moulées par injection de plastique (46) avec des éléments à borne guillotine (47) insérés dessus, et lesquels contacts à borne guillotine (45) servent d'une part à la mise en contact des extrémités des lignes de branchement (41) et d'autre part des lames de contact (36).

6. Stator selon l'une des revendications 1 à 5,
**caractérisé en ce que** des éléments de serrage et de guidage (46) sont conçus sur le fond (42) du disque de commutation (40) pour les lignes de branchement (41) individuelles et **en ce qu'**un évidement (49) ouvert sur le bord est présent pour l'arrivée latérale des lignes de branchement (41) dans l'espace intérieur du disque de commutation (40).

7. Stator selon l'une des revendications 1 à 6,
**caractérisé en ce qu'**une bague intermédiaire (51) périphérique est prévue entre le disque de commutation (40) et l'ensemble interne de stator (2), laquelle bague peut être enfoncée par un côté sur le bord (43) du disque de commutation (40), de sorte que le disque de commutation (40) est conçu en deux parties.

8. Stator selon l'une des revendications 1 à 7,
**caractérisé en ce que** des pattes d'encliquetage (52) sont conçues sur le bord de l'ouverture (44) du disque de commutation (40), lesquelles pattes coopèrent avec des crochets d'encliquetage (53) sur l'embase (32) de forme cylindrique du corps plastique (10) et fixent le disque de commutation (40) dans l'état emboîté, dans lequel le disque de commutation (40) est dimensionné de telle sorte qu'il s'applique sur l'ensemble de tôle stator de la bague de reflux (3) dans l'état emboîté.

9. Stator selon l'une des revendications 1 à 8,
**caractérisé en ce qu'**une protection de tête d'enroulement (54) en forme de demi-coque peut être emboîtée sur le côté opposé au disque de commutation (40) et présente une ouverture d'enfichage (55) centrale, ouverture avec laquelle la protection de tête d'enroulement (54) peut être emboîtée sur une embase (33) en forme de cylindre du corps d'isolation plastique (10) et s'applique dans son état emboîté par son extrémité avant sur la bague de reflux (3).

10. Stator en particulier selon l'une des revendications 1 à 9,
**caractérisé en ce que** le corps d'isolation (10) présente dans des espaces axiaux (15) situés entre les barrettes polaires (7) une partie de fond (16) et deux parties de paroi (17) se faisant face et des barrettes de recouvrement (18) orientées les unes vers les autres et présente une fente (19) entre les extrémités de barrette des barrettes de recouvrement (18) se faisant face et **en ce qu'**un espace d'enroulement est compris entre la partie de fond (16), les parties de paroi (17) et les barrettes de recouvrement (18), lequel espace sert au logement de deux moitiés d'enroulement voisines des enroulements de moteur (11) enroulés autour des barrettes polaires (7).

11. Stator selon l'une des revendications 1 à 10,
**caractérisé en ce qu'**une embase (21) de la partie de fond (16) du corps d'isolation (10) dépasse à l'intérieur dans une fente d'espacement (20) présente entre les cosses polaires (6) juxtaposées, cette fente d'espacement (20) étant fermée.

12. Stator selon l'une des revendications 1 à 11,
**caractérisé en ce qu'**une rainure axiale (23), qui est agencée au centre dans la fente, est conçue dans l'embase (21) entre deux élévations (22) de la partie de fond (16).

13. Stator selon l'une des revendications 1 à 12,
**caractérisé en ce qu'**un coulisseau (25) mixte, qui est poussé latéralement dans la direction axiale entre les enroulements (11) dans les espaces axiaux (15) lorsque la bague de reflux (3) est montée, est utilisé pour la séparation de chanfrein entre les pôles de stator formés par les enroulements (11) se trouvant sur les barrettes polaires (7).

14. Stator selon l'une des revendications 1 à 13,
**caractérisé en ce que** le coulisseau (25) est conçu en forme de T en section transversale, dans lequel sa branche en T (27) radiale plus longue agit comme séparateur de chanfrein et est guidée par son extrémité libre intérieure dans la rainure axiale (23) et dépasse par son extrémité extérieure dans la fente (19), et sa branche en T (28) courte, agencée selon le pourtour, est guidée dans la rainure d'estampage (26) et dans la fente (19) et est adaptée à leur section transversale.

15. Stator selon l'une des revendications 1 à 14,
**caractérisé en ce que** l'extension axiale du corps d'isolation (10) correspond à la longueur axiale des enroulements (11), de sorte que le corps d'isolation (10) dépasse à chaque fois sur les deux côtés de la bague de reflux (3) par une partie d'extrémité (30, 31) de la hauteur des têtes d'enroulement formées par les enroulements (11).
